# FASCICULE DE BREVET EUROPEEN

(11) **EP 1 541 967 B1**
(45) Date de publication et mention de la délivrance du brevet: **29.06.2016**
(21) Numéro de dépôt: 04292889.5
(22) Date de dépôt: 06.12.2004
(51) Int. Cl.: G01C 19/5691

(54) **Capteur de rotation inertiel à traitement isotrope**
Inertialer Drehwinkelsensor mit isotropischen Verarbeitung
Inertial rotation sensor with isotropic processing

(30) Priorité: 11.12.2003 FR 0314511
(43) Date de publication de la demande: 15.06.2005
(73) Titulaire: SAGEM DEFENSE SECURITE, 92100 Boulogne Billancourt (FR)
(72) Inventeur: Ragot, Vincent, 92100 BOULOGNE-BILLANCOURT (FR); Renault, Alain, 92100 BOULOGNE- BILLANCOURT (FR)
(74) Mandataire: Fruchard, Guy

(56) Documents cités:
- EP-A- 0 859 218
- EP-A- 1 015 849
- WO-A-00/45127
- US-A1- 2002 040 602

## Description

La présente invention concerne un capteur de rotation inertiel à résonateur vibrant.

### ARRIERE PLAN DE L'INVENTION

On connaît des capteurs de rotation inertiels comprenant un résonateur vibrant, que celui-ci soit une cloche vibrante ou un quapason, associé à des transducteurs définissant une paire de voies de commande et une paire de voie de détection. Dans les capteurs existants, chacune des voies est reliée à une chaîne de traitement qui lui est dédiée, de sorte qu'en raison de différences de performances entre les composants formant la chaîne de traitement il existe une anisotropie de traitement sur les différentes voies. Cette anisotropie se traduit par une dérive du capteur par une accumulation d'erreurs de phase et de gain lors de la mise en oeuvre du capteur.

On connaît également du document WO 00/45127 un capteur de rotation inertiel à résonateur vibrant dans lequel quatre voies sont utilisées alternativement en commande et en détection en utilisant un multiplexage temporel. En commande, chaque voie reçoit un signal d'excitation individuel tandis qu'en détection les voies sont raccordées par paires à deux amplificateurs différentiels distincts. Tant en commande qu'en détection il existe donc une différence de traitement des voies.

On connaît encore du document EP 859 218 un capteur de rotation inertiel à résonateur vibrant comportant un organe de multiplexage assurant une combinaison de quatre signaux de commande générés séparément. Chaque signal de commande est donc généré avec un gain propre de sorte que le gain complexe du signal appliqué aux différentes électrodes de commande varie selon les électrodes. Les signaux de détection sont en outre traités de façon séparée.

### OBJET DE L'INVENTION

Un but de l'invention est de proposer un capteur de rotation inertiel à résonateur vibrant minimisant les dérives liées à la mise en oeuvre du capteur.

### BREVE DESCRIPTION DE L'INVENTION

En vue de la réalisation de ce but, on prévoit selon l'invention, un capteur de rotation inertiel comprenant un résonateur vibrant de type cloche ou quapazon, associé à des transducteurs définissant une paire de voies de commande et une paire de voies de détection. Le capteur comporte un organe de multiplexage unique associant les deux paires de voies à une unité de traitement unique de telle manière que toutes les voies de commande reçoivent un signal d'excitation issu d'une même chaîne de traitement de l'unité de traitement et tous les signaux de détection recueillis sont traités par la même chaîne de traitement, la chaîne de traitement comprenant une branche de commande comportant un convertisseur numérique/analogique et une branche de détection comportant un organe correcteur de gain très élevé associé à un convertisseur analogique/numérique, et des moyens pour associer la branche de commande à la branche de détection selon une boucle de réaction.

Ainsi, toutes les voies de commande reçoivent un signal d'excitation issu de la même chaîne de traitement et tous les signaux de détections recueillis sont traités par la même chaîne de traitement de sorte que l'anisotropie de traitement de chacune des paires de voies est éliminée et les performances du capteur sont améliorées.

Le fait que le capteur comporte un organe de multiplexage unique associant les deux paires de voies à une unité de traitement unique et fonctionnant en multiplexage sur l'ensemble des voies de commande et de détection permet de supprimer non seulement l'anisotropie au sein d'une paire de voies mais également la diaphonie entre la commande et la détection de sorte que les performances du capteur se trouvent encore améliorées.

Selon encore un autre aspect de l'invention, l'unité de traitement réalise des temps de relaxation séparant des temps d'action de façon qu'au moins un temps d'action de détection soit précédé d'un temps de relaxation. On minimise ainsi la diaphonie entre la commande et la détection. De préférence, tous les temps d'action sont séparés par des temps de relaxation. On assure ainsi une décorrélation optimale des différents temps d'action.

### BREVE DESCRIPTION DES DESSINS

D'autres caractéristiques et avantages de l'invention apparaîtront à la lecture de la description qui suit de deux modes de réalisation non limitatifs de l'invention en relation avec les figures ci-jointes parmi lesquelles :
- la figure 1 est une représentation schématique d'un premier mode de réalisation du capteur,
- la figure 2 est une représentation schématique analogue à celle de la figure 1 d'un second mode de réalisation.

### DESCRIPTION DETAILLEE DE L'INVENTION

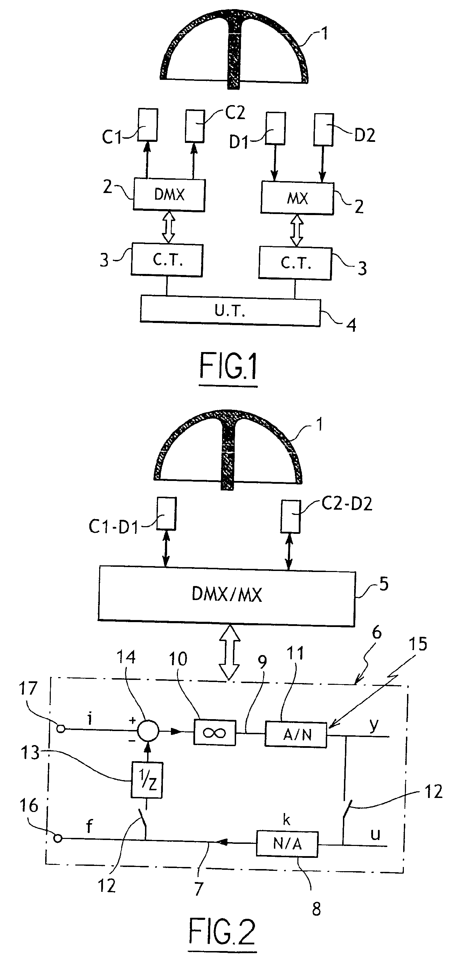

En référence à la figure 1, le capteur de rotation inertiel comprend de façon connue en soi un résonateur vibrant 1 symbolisé sur la figure par une cloche vibrante bien que le résonateur vibrant puisse également avoir d'autres formes notamment une forme de quapason. Le résonateur vibrant 1 est associé à des transducteurs définissant une paire de voies de commande C1, C2 et une paire de voies de détection D1, D2. Bien que chaque voie soit représentée sur la figure par un seul bloc, chaque voie comporte généralement plusieurs transducteurs. En particulier dans le cas d'une cloche vibrante chaque voie comporte en général au moins deux transducteurs formés par des entrefers entre une couche métallique portée par la cloche vibrante et polarisée par une tension continue, et des électrodes disposées en regard du bord de la cloche vibrante, tandis que dans un capteur comportant un quapason, chaque voie comporte généralement quatre transducteurs piézo-électriques.

Selon le premier mode de réalisation illustré par la figure 1, chaque paire de voies est associée à un organe de multiplexage 2, plus précisément un démultiplexeur pour les voies de commande C1, C2 et un multiplexeur pour les voies de détection D1, D2. Chaque organe de multiplexage 2 est relié à une chaîne de traitement 3. La chaîne de traitement 3 associée aux voies de commande C1, C2 élabore à partir d'un générateur unique un signal de commande multiplexé qui est transmis au démultiplexeur 2 correspondant tandis que la chaîne de traitement 3 associée aux voies de détection D1, D2 assure un démultiplexage du signal reçu du multiplexeur 2 et un traitement de celui-ci pour élaborer un signal de traitement numérique. Les chaînes de traitement 3 sont reliées à une unité de traitement 4 qui assure une exploitation des signaux de détection pour calculer les mouvements auxquels le capteur est soumis et une élaboration des signaux de commande ainsi que des signaux de cadencement des organes de multiplexage.

Selon un aspect de l'invention, le multiplexage est de préférence effectué en séparant les temps d'action de commande et les temps d'action de détection et en séparant les temps d'action eux-mêmes par des temps de relaxation. De préférence, chaque cycle généré par l'unité de traitement comprend des temps d'action de commande sur chaque voie de commande suivis de temps d'action de détection sur chaque voie de détection. Si l'on symbolise par c1 un temps d'action sur la première voie de commande, par c2 un temps d'action sur la seconde voie de commande, par d1 un temps d'action sur la première voie de détection, par d2 un temps d'action sur la seconde voie de détection et par r un temps de relaxation, chaque cycle comporte donc de préférence la séquence c1-r-c2-r d1-r-d2-r qui assure une réduction optimale des diaphonies tant entre les voies de commande entre elles ou les voies de détection entre elles qu'entre les voies de commande et les voies de détection. On notera à ce propos que les temps d'action et de relaxation n'ont pas forcément la même durée. Typiquement, on peut prévoir des temps d'action de commande de 50 µs, des temps de détection de 120 µs et des temps de relaxation de 2 µs qui permettent d'obtenir une diaphonie inférieure à 10⁻⁶.

La figure 2 illustre un mode de réalisation préféré de l'invention dans lequel les transducteurs C1-D1 et C2-D2 fonctionnent alternativement en commande et en détection en étant associés à un organe de multiplexage 5 unique pour l'ensemble des voies de commande et de détection. L'organe de multiplexage 5 assure alternativement un démultiplexage des signaux de commande et un multiplexage des signaux de détection. Dans ce cas l'organe de multiplexage unique 5 est relié à une unité de traitement unique 6 comportant de préférence une chaîne de traitement 15 permettant à la fois d'élaborer le signal de commande et d'analyser le signal de détection. A cet effet, dans le mode de réalisation préféré, la chaîne de traitement 15 comprend une branche de commande 7 comportant un convertisseur numérique/analogique 8 ayant un gain k qui transforme un signal de commande numérique u en signal de commande analogique f donné par l'expression f = ku. Le signal f est alternativement transmis par l'intermédiaire d'une borne 16 aux transducteurs C1-D1 et C2-D2 pendant les temps d'action de commande c1, c2 du capteur. Le circuit de traitement comporte par ailleurs une branche de détection 9 comprenant une borne d'entrée 17 qui reçoit alternativement des signaux des transducteurs C1-D1 et C2-D2 lors des phases de détection d1, d2 du capteur. La borne d'entrée 17 est reliée à l'entrée sommatrice d'un amplificateur de charge 14 qui transforme un signal de courant i en signal de tension. La branche de détection 9 comporte en outre un organe correcteur 10 ayant un gain très élevé assimilable à un gain infini, suivi d'un convertisseur analogique/numérique 11. La branche de détection 9 est associée à la branche de commande 7 par des interrupteurs 12 pour former une boucle de réaction qui est ouverte pendant les temps d'action de commande et fermée pendant les temps d'action de détection. La boucle de réaction comporte en outre un composant 13 assurant une division par l'impédance équivalente du circuit et relié à la borne inverse de l'amplificateur de charge 14 de sorte que le signal y recueilli à la sortie de la branche de détection est représentatif de l'équation y = zi/k où i représente l'intensité détectée par le capteur. On constate que l'erreur de gain introduite lors de la commande par le gain k du comparateur se trouve ainsi éliminée lors de la détection, ce qui permet d'améliorer la performance du capteur et de minimiser l'erreur de phase sur la commande de quadrature du capteur.

Bien entendu, l'invention n'est pas limitée aux modes de réalisation décrits et on peut y apporter des variantes de réalisation sans sortir du cadre de l'invention tel que défini par les revendications.

En particulier, on peut utiliser un organe de multiplexage unique 5 comme décrit en relation avec la figure 2 mais en associant néanmoins cet organe de multiplexage unique à des transducteurs séparés pour les voies de commande et pour les voies de détection.

Bien que le cycle de traitement ait été décrit selon un mode de mise en oeuvre préféré comportant un temps de relaxation entre chaque temps d'action, on peut également réaliser des cycles un peu moins performants mais diminuant néanmoins la diaphonie entre la commande et la détection en prévoyant seulement un temps de relaxation entre les séquences de temps d'action de commande et les séquences de temps d'action de détection, par exemple, en utilisant la même notation que précédemment, selon des séquences c1-c2-r-d1-d2 ou c1-r-d1-c2-r-d2.

## Revendications

1. Capteur de rotation inertiel comprenant un résonateur vibrant (1) en forme de cloche ou quapason associé à des transducteurs définissant une paire de voies de commande (C1, C2) et une paire de voies de détection (D1, D2), **caractérisé en ce qu'**il comporte un organe de multiplexage unique (5) associant les deux paires de voies à une unité de traitement unique (6)de telle manière que toutes les voies de commande reçoivent un signal d'excitation issu d'une même chaîne de traitement (15) de l'unité de traitement et tous les signaux de détection recueillis sont traités par la même chaîne de traitement, la chaîne de traitement (15) comprenant une branche de commande (7) comportant un convertisseur numérique/analogique (8) et une branche de détection (9) comportant un organe correcteur de gain très élevé (10) associé à un convertisseur analogique/numérique (11), et des moyens (12, 13, 14) pour associer la branche de commande (7) à la branche de détection (9) selon une boucle de réaction.

2. Capteur selon la revendication 1, **caractérisé en ce qu'**il comporte une unité de traitement (4 ; 6) générant des temps de relaxation (r) séparant des temps d'action (c1, c2, d1, d2) de façon qu'au moins un temps d'action de détection (d1, d2) soit précédé d'un temps de relaxation (r).

3. Capteur selon la revendication 2, **caractérisé en ce que** l'unité de traitement (4, 6) génère des cycles comprenant des temps d'action de commande (c1, c2) sur chaque voie de commande (C1, C2) suivis de temps d'action de détection (d1, d2) sur chaque voie de détection (D1, D2).

4. Capteur selon la revendication 3, **caractérisé en ce que** tous les temps d'action sont séparés par des temps de relaxation.

5. Capteur selon la revendication 1, **caractérisé en ce que** les voies de commande et les voies de détection comprennent des transducteurs communs (C1-D1, C2-D2).

## Patentansprüche

1. Inertialer Rotationssensor, umfassend einen schwingenden Resonator (1) in Glocken- oder Quapasonform, der mit Wandlern verbunden ist, die ein Paar von Steuerkanälen (C1, C2) und ein Paar von Detektionskanälen (D1, D2) definieren, **dadurch gekennzeichnet, dass** er ein einziges Multiplexorgan (5) umfasst, das die beiden Paare von Kanälen mit einer einzigen Verarbeitungseinheit (6) derart verbindet, dass alle Steuerkanäle ein Anregungssignal empfangen, das von einer selben Verarbeitungskette (15) der Verarbeitungseinheit stammt, und alle empfangenen Detektionssignale von derselben Verarbeitungskette verarbeitet werden, wobei die Verarbeitungskette (15) einen Steuerzweig (7) umfasst, der einen Digital-Analog-Umsetzer (8) umfasst, sowie einen Detektionszweig (9), der ein Stellglied (10) mit sehr hoher Verstärkung umfasst, das mit einem Analog-Digital-Umsetzer (11) verbunden ist, und Mittel (12, 13, 14) zum Verbinden des Steuerzweigs (7) mit dem Detektionszweig (9) gemäß einer Rückkopplungsschleife.

2. Sensor nach Anspruch 1, **dadurch gekennzeichnet, dass** er eine Verarbeitungseinheit (4; 6) umfasst, die Relaxationszeiten (r) erzeugt, die die Aktionszeiten (c1, c2, d1, d2) derart trennen, dass mindestens einer Detektionsaktionszeit (d1, d2) eine Relaxationszeit (r) vorausgeht.

3. Sensor nach Anspruch 2, **dadurch gekennzeichnet, dass** die Verarbeitungseinheit (4, 6) Zyklen erzeugt, die Steueraktionszeiten (c1, c2) auf jedem Steuerkanal (C1, C2) gefolgt von Detektionsaktionszeiten (d1, d2) auf jedem Detektionskanal (D1, D2) umfasst.

4. Sensor nach Anspruch 3, **dadurch gekennzeichnet, dass** alle Aktionszeiten durch Relaxationszeiten getrennt sind.

5. Sensor nach Anspruch 1, **dadurch gekennzeichnet, dass** die Steuerkanäle und die Detektionskanäle gemeinsame Wandler (C1-D1, C2-D2) umfassen.

## Claims

1. Inertial rotation sensor comprising a vibrating resonator (1) having the form of a bell or a Quapason™ associated with transducers defining a pair of control channels (C1, C2) and a pair of detection channels (D1, D2), **characterised in that** it includes a single multiplexer member (5) associating both pairs of channels with a single processing unit (6) so that all the control channels receive an excitation signal from the same processing system (15) of the processing unit and all the collected detection signals are processed by the same processing system, the processing system (15) having a control branch (7) with an analogue-to-digital converter (8) and a detection branch (9) with a very high gain corrector member (10) associated with an analogue-to-digital converter (11), and means (12, 13, 14) for associating the control branch (7) with the detection branch (9) in a feedback loop.

2. Sensor according to claim 1, **characterised in that** it includes a processing unit (4; 6) generating relaxation times (r) separating action times (c1, c2, d1, d2) in such a manner that at least one detection action time (d1, d2) is preceded by a relaxation time (r).

3. Sensor according to claim 2, **characterised in that** the processing unit (4, 6) generates cycles comprising control action times (c1, c2) on each of the control channels (C1, C2) followed by detection action times (d1, d2) on each of the detection channels (D1, D2).

4. Sensor according to claim 3, **characterised in that** all of the action times are separated from one another by relaxation times.

5. Sensor according to claim 1, **characterised in that** the control channels and the detection channels have transducers (C1-D1, C2-D2) in common.
